# EUROPÄISCHE PATENTANMELDUNG

(11) **EP 2 058 564 A1**
(43) Veröffentlichungstag der Anmeldung: **13.05.2009**
(21) Anmeldenummer: 07021916.7
(22) Anmeldetag: 12.11.2007
(51) Int. Cl.: F16J 15/06, F16J 15/08, F16J 15/10

(54) **Dichtungsanordnung, Dichtring der Dichtungsanordnung und deren Verwendung**

(71) Anmelder: Carl Freudenberg KG, 69469 Weinheim (DE)
(72) Erfinder: Gerland, Armin, 79685 Häg-Ehrsberg (DE); Gottstein, Detlef, 79725 Laufenburg (DE); Gramlich, Martin, 69493 Leutershausen/Hirschberg (DE); Krakofczik, Claus, 69502 Hemsbach (DE); Masuch, Christoph, 79733 Görwihl (DE); Kreiselmaier, Rainer, 67071 Ludwigshafen (DE); Nussko, Marina, 68167 Mannheim (DE); von der Au, Stephan, 55234 Albig (DE)

(57) **Zusammenfassung**

Dichtungsanordnung, umfassend zumindest einen Dichtring (1) zur Abdichtung eines im Wesentlichen U-förmigen Dichtspalts (2) zwischen zwei Maschinenelementen (3,4), wobei der Dichtring (1) kongruent zum Dichtspalt (2) im Wesentlichen U-förmig ausgebildet ist, mit einem Boden (5) und einem axial vom Boden (5) abgewandten offenen Rand (6).
Die Dichtungsanordnung und der Dichtring werden in CO₂-Klimaanlagen verwendet.

## Beschreibung

### Technisches Gebiet

Die Erfindung betrifft eine Dichtungsanordnung, einen Dichtring der Dichtungsanordnung und die Verwendung der Dichtungsanordnung oder des Dichtrings.

### Stand der Technik

Dichtungsanordnungen und Dichtringe, die einen Bestandteil der Dichtungsanordnungen bilden, gelangen beispielsweise bei der Verbindung zweier Maschinenelementen zur Anwendung, wobei die beiden Maschinenelemente von flüssigen oder gasförmigen Medien durchströmbar sind. Zur Abdichtung der Maschinenelemente gelangen beispielsweise O-Ring-Dichtungen zur Anwendung, die jedoch nicht für alle Anwendungsfälle gleichermaßen gut geeignet sind. Insbesondere dann, wenn CO₂-Klimaanlagen abzudichten sind, weisen O-Ring-Dichtungen häufig eine zu große Permeabilität auf. Außerdem verlangen Abdichtungen für CO₂-Klimaanlagen eine sehr hohe Verpressung der elastomeren Dichtungen. Diese sehr hohe Verpressung erfordert große Montagekräfte, die auch an nahezu unzugänglichen Stellen von Hand aufgebracht werden müssen.

### Darstellung der Erfindung

Der Erfindung liegt die Aufgabe zu Grunde, eine Dichtungsanordnung und einen Dichtring daraus derart weiter zu entwickeln, dass die Dichtungsanordnung und der Dichtring permeationsarm und deshalb besonders gut zur Abdichtung von CO₂-Klimaanlagen geeignet sind. Außerdem sollen Dichtungsanordnung und Dichtring einfach und prozesssicher montierbar sein.

Zur Lösung der Aufgabe ist eine Dichtungsanordnung vorgesehen und ein Dichtring, wobei die Dichtungsanordnung zumindest einen Dichtring zur Abdichtung eines im Wesentlichen U-förmigen Dichtspalts zwischen zwei Maschinenelementen umfasst, wobei der Dichtring kongruent zum Dichtspalt im Wesentlichen U-förmig ausgebildet ist, mit einem Boden und einem axial vom Boden abgewandten offenen Rand.
Bei einer solchen Dichtungsanordnung ist die Gestalt des Dichtrings besonders vorteilhaft. Durch den labyrinthähnlichen Dichtring wird ein sehr gutes Dichtergebnis auch dann erzielt, wenn die abzudichtenden Drücke, wie im Fall der Abdichtung von CO₂-Klimaanlagen, sehr hoch sind. Der Dichtring weist im Vergleich zu seinem langen Permeationsweg eine nur geringe Materialstärke auf, wobei der lange Permeationsweg durch die Gestalt des U-förmigen Dichtrings und den entsprechend langen Dichtspalt bedingt ist. Im Vergleich zu einer herkömmlichen O-Ring-Dichtung ist das Dichtergebnis wesentlich verbessert.
Der Dichtring ist also ähnlich einer konvexen oder konkaven Membran ausgebildet.
Der Boden des Dichtrings ist bevorzugt konvex/linsenförmig ausgebildet. Dabei ist von Vorteil, dass der Dichtring selbstzentrierend ist, dass die Montage zwischen den beiden Maschinenelementen auch deshalb besonders einfach ist, und die Gefahr von montagebedingten Beschädigungen des Dichtrings ist auf ein Minimum reduziert.

Bevorzugt ist der Dichtring einteilig ausgebildet, da dadurch das Handling während der Montage vereinfacht ist. Auch die Gefahr von Montagefehlem ist auf ein Minimum reduziert.
Um Beschädigungen des Dichtrings durch Materialanhäufungen während der Montage zu vermeiden, kann dem Dichtring innerhalb des Dichtspalts ein weiterer Dichtring in einer funktionstechnischen Reihenschaltung zugeordnet sein.

Der offene Rand kann eine umfangsseitig umlaufende wulstförmige erste Verdickung aufweisen. Die erste Verdickung kann kraft-und/oder formschlüssig in einer ersten Vertiefung von einem der Maschinenelemente festlegbar sein, wobei der Dichtring und dieses Maschinenelement eine vormontierbare Einheit bilden. Die Lagerung und der Transport des Dichtrings sind dadurch vereinfacht und die Gefahr seiner Beschädigung ist praktisch ausgeschlossen.

Axial zwischen dem Rand und dem Boden kann eine sich in radialer Richtung erstreckende kreisringförmige Stufe angeordnet sein.
In einem solchen Fall können die sich axial beiderseits an die Stufe anschließenden Teilbereiche jeweils konisch ausgebildet sein. Der Winkel der beiden konisch ausgebildeten Teilbereiche ist dabei bevorzugt gleich, beispielsweise bezogen auf die Symmetrieachse des Dichtrings. Die kreisringförmige Stufe bedingt eine einfachere Montage des Dichtrings zwischen den beiden Maschinenelementen, weil die Positionierung des Dichtrings während seiner Montage dadurch vereinfacht ist.
Außerdem begrenzt die Stufe Ausdehnungen des Dichtrings in radialer Richtung und stellt somit eine gleichbleibende Geometrie im verbauten Zustand sicher.

Der Boden kann eine im Wesentlichen zentrisch angeordnete Durchbrechung aufweisen, zur Abdichtung von Teilleitungen der beiden Maschinenelemente, die konzentrisch zu der Durchbrechung angeordnet sind. Eine solche Anordnung/Ausgestaltung liegt beispielsweise dann vor, wenn die Dichtungsanordnung/der Dichtring in CO₂-Klimaanlagen zur Anwendung gelangen. Die beiden Maschinenelemente bilden einen Blockverbinder, um flüssigkeits-oder gasführende Leitungen der Klimaanlage dichtend miteinander zu verbinden.
Der Dichtring ist in einem solchen Fall trichterförmig gestaltet.
In manchen Anwendungsfällen hat es sich als vorteilhaft bewährt, wenn der Dichtring, z.B. aussenumfangsseitig, von dem weiteren Dichtring umschlossen ist. Der weitere Dichtring ist dann beispielsweise in Form einer kreisringförmigen Scheibe gestaltet.

Der Boden kann eine die Durchbrechung begrenzende umfangsseitig umlaufende wulstförmige zweite Verdickung aufweisen, wobei die zweite Verdickung kraft-und/oder formschlüssig in einer zweiten Vertiefung von einem der Maschinenelementen festlegbar ist, wobei der Dichtring und dieses Maschinenelement eine vormontierbare Einheit bilden.

Dem Dichtring kann, in Abhängigkeit vom jeweiligen Anwendungsfall, innerhalb des Dichtspalts ein weiterer Dichtring in einer funktionstechnischen Reihenschaltung zugeordnet sein. Dadurch wird der Labyrinth-Effekt der Dichtungsanordnung weiter verstärkt und die Wirkung der Abdichtung verbessert.

Der Dichtring und/oder der weitere Dichtring können aus einem Elastomer, aus einem Softmetall oder aus einem mit einem Elastomer beschichteten Softmetall bestehen. Dichtringe aus solchen Werkstoffen sind einfach und kostengünstig herstellbar.

Die zuvor beschriebene Dichtungsanordnung und der zuvor beschriebene Dichtring können besonders vorteilhaft in CO₂-Klimaanlagen verwendet werden.

### Kurzbeschreibung der Zeichnung

Ausführungsbeispiele der erfindungsgemäßen Dichtungsanordnung und des erfindungsgemäßen Dichtrings, jeweils verwendet in einer CO₂-Klimaanlage, werden nachfolgend anhand der Figuren 1 bis 6 näher beschrieben,
Figur 1 zeigt ein erstes Ausführungsbeispiel, das einen Dichtring und einen weiteren Dichtring umfasst,
Figur 2 ein zweites Ausführungsbeispiel mit einem stufenförmig abgesetzten Dichtring,
Figur 3 ein weiteres Ausführungsbeispiel, ähnlich dem Ausführungsbeispiel aus Figur 2, wobei im Bereich der Durchbrechung eine zweite Verdickung angeordnet ist,
Figur 4 ein weiteres Ausführungsbeispiel, ähnlich dem Ausführungsbeispiel aus Figur 3, wobei der Dichtring von einem weiteren Dichtring umschlossen ist, Figur 5 ein Ausführungsbeispiel, bei dem der Dichtring asymmetrisch gestaltet ist,
Figur 5a eine Draufsicht auf den asymmetrisch gestalteten Dichtring aus Figur 5,
Figur 6 ein weiteres Ausführungsbeispiel, mit einem Dichtring, der im Gegensatz zum Dichtring aus Figur 1 im Wesentlichen konkav gestaltet ist.

### Ausführung der Erfindung

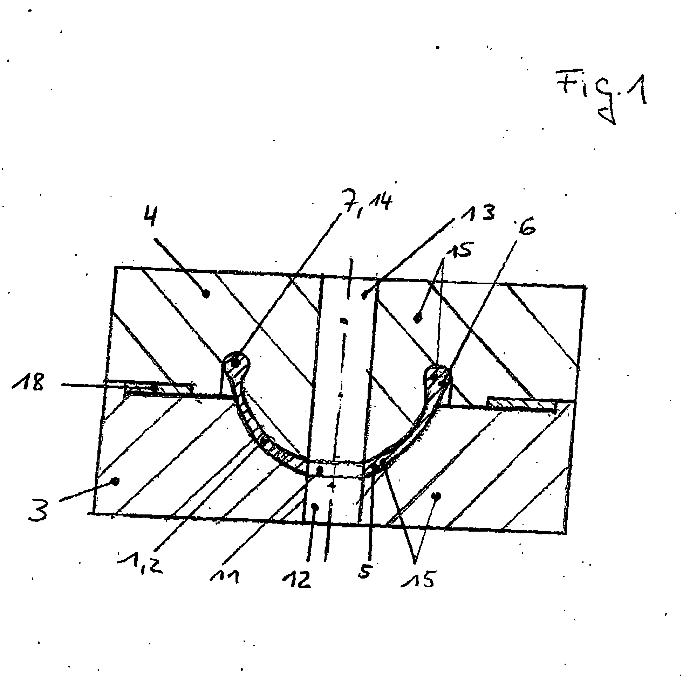

In den Figuren 1 bis 6 sind Ausführungsbeispiele einer Dichtungsanordnung gezeigt, die jeweils einen Dichtring 1 umfassen. Die beiden Maschinenelemente 3, 4 bilden jeweils einen Bestandteil eines Blockverbinders in einer CO₂-Klimaanlage, wobei jedes der Maschinenelemente 3, 4 eine Teilleitung 12,13 aufweist, die gemeinsam von einem flüssigen oder gasförmigen Medium durchströmbar sind.
Um die Durchströmbarkeit zu gewährleisten, weist der Boden 5 eine im Wesentlichen zentrisch angeordnete Durchbrechung 11 auf, die im Querschnitt im Wesentlichen den jeweiligen Querschnitten der Teilleitungen 12,13 entspricht. Das Strömungsmedium wird durch den Dichtring 1 abgedichtet.
Der U-förmige Dichtring 1 ist unter elastischer Vorspannung dichtend in einem kongruent gestalteten U-förmigen Dichtspalt 2 angeordnet.

In den hier gezeigten Ausführungsbeispielen besteht der Dichtring 1 jeweils aus einem geeigneten elastomeren Werkstoff; davon abweichend kann als Werkstoff für den Dichtring 1 auch ein Softmetall oder ein mit einem Elastomer beschichtetes Softmetall zur Anwendung gelangen.

Durch die im Wesentlichen trichterförmige Gestalt des Dichtrings 1 ist dieser innerhalb seines Einbauraums zwischen den beiden Maschinenelementen 3, 4 selbstzentrierend. Die Montage ist dadurch besonders einfach und die Gefahr von Montagefehlem auf ein Minimum reduziert.

In Figur 1 weist der Dichtring 1 im Bereich seines stirnseitig offenen Rands 6 eine umfangsseitig umlaufende wulstförmige erste Verdickung 7 auf. Die wulstförmige erste Verdickung 7 ist jeweils in einer kongruent gestalteten ersten Vertiefung 14 der beiden Maschinenelemente 3,4 angeordnet, wobei der Dichtring 1 mit dem ersten Maschinenelement 3 oder mit dem zweiten Maschinenelement 4 eine vormontierbare Einheit 15 bilden kann. Die gute Dichtwirkung ist auf die große Oberfläche des Dichtrings 1 zurückzuführen und den daraus resultierenden großen Kontaktbereich zu den beiden Maschinenelementen 3,4. Der Dichtring 1 entspricht deshalb in seiner Funktion im Wesentlichen einer Labyrinthdichtung.
Der Dichtring 1 ist von dem weiteren Dichtring 18 aussenumfangsseitig umschlossen. Durch die Anordnung des weiteren Dichtrings 18 ist die Permeationsstrecke weiter verlängert, so dass die gezeigte Dichtungsanordnung besonders dicht ist.

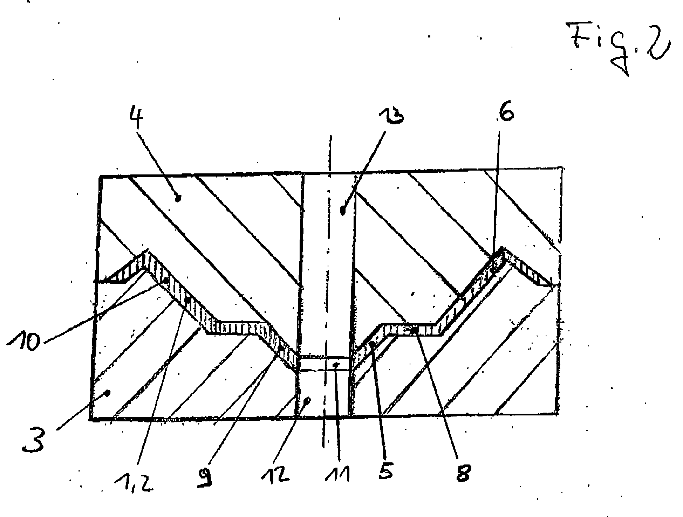

In Figur 2 ist ein Dichtring 1 gezeigt, bei dem axial zwischen dem Rand 6 und dem Boden 5 eine sich in radialer Richtung erstreckende kreisringförmige Stufe 8 angeordnet ist. Diese Stufe 8 erleichtert nicht nur die Positionierung des Dichtrings 1 innerhalb seines Einbauraums zwischen den beiden Maschinenelementen 3, 4. Durch die Stufe 8, den radial außen axial in Richtung Boden 5 umgelegten Rand 6 und den daraus resultierenden großen, im Wesentlichen mäanderförmigen Kontaktbereich zu den beiden Maschinenelementen 3,4 hat die Dichtungsanordnung einen besonders langen Permeationsweg und der Dichtring 1 die Funktion einer Labyrinthdichtung. Die Dichtungsanordnung ist dadurch besonders dicht. Die Stufe 8 begrenzt die Ausdehnung in radialer Richtung und stellt somit eine gleichbleibende Geometrie im verbauten Zustand sicher.

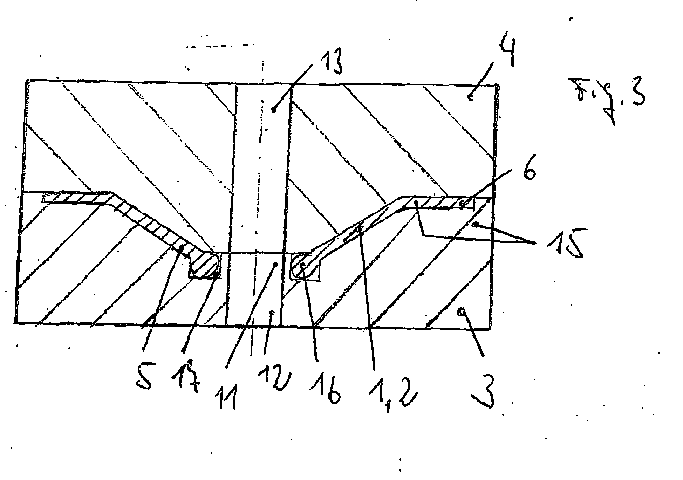

In Figur 3 ist ein weiteres Ausführungsbeispiel gezeigt, bei dem die zweite Verdickung 16 in einer zweiten Vertiefung 17 des ersten Maschinenelements 3 verliersicher angeordnet ist. Die Durchbrechung 11 im Boden 5 ist durch die zweite Verdickung 16 begrenzt.

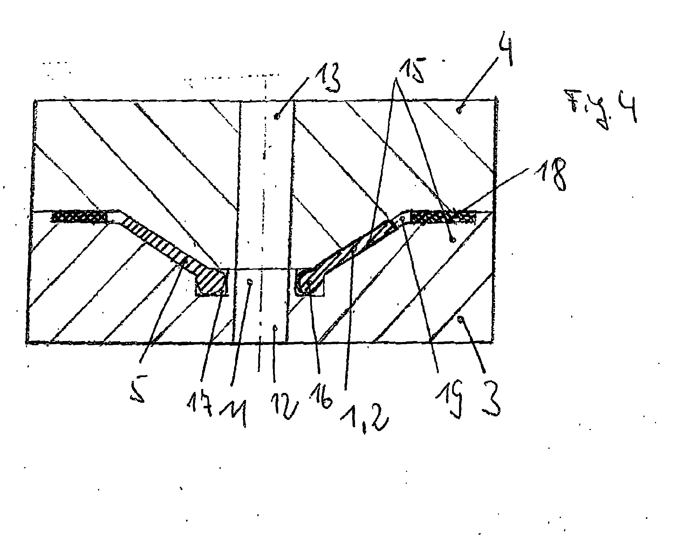

Das Ausführungsbeispiel aus Figur 4 unterscheidet sich vom vorherigen Ausführungsbeispiel aus Figur 3 dadurch, dass der Dichtring 1 vom weiteren Dichtring 18 aussenumfangsseitig mit radialerem Abstand 19 umschlossen ist.

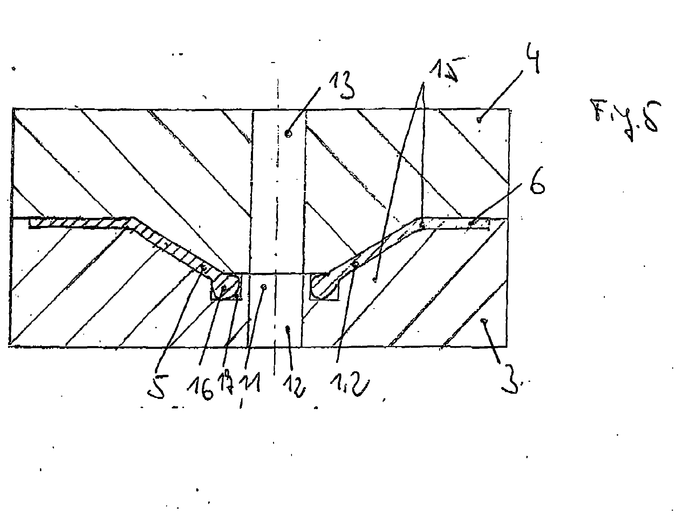

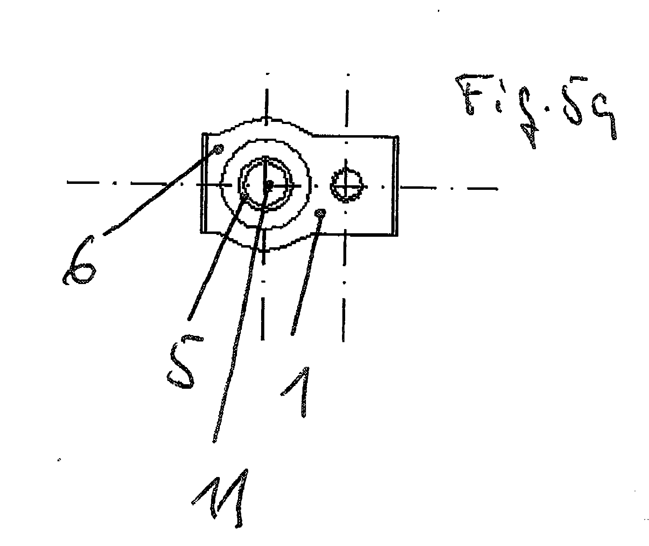

In Figur 5 ist ein weiteres Ausführungsbeispiel gezeigt, bei dem der Dichtring 1, im Gegensatz zum Dichtring 1 aus Figur 3 asymmetrisch ausgebildet ist.

In Figur 5a ist der Dichtring 1 aus Figur 5 in einer Draufsicht gezeigt. Durch seine asymmetrische Gestalt schützt der Dichtring 1 die Dichtungsanordnung besonders gut vor eindringenden Verunreinigungen.

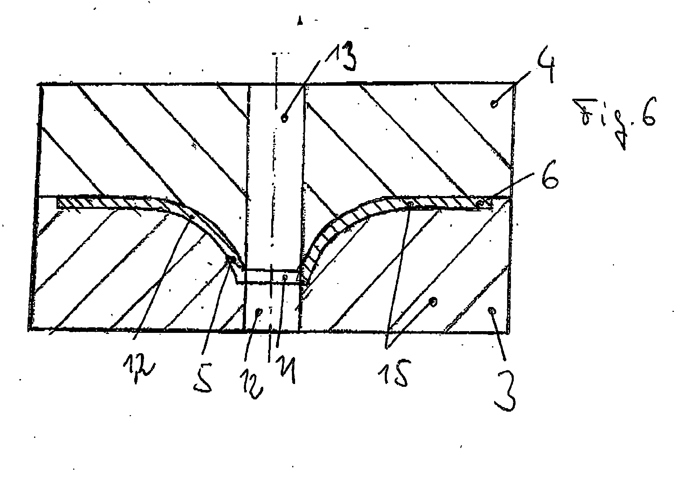

In Figur 6 ist ein weiteres Ausführungsbeispiel gezeigt, ähnlich dem Ausführungsbeispiel aus Figur 2, wobei der Dichtring 1 einen konkav gewölbten Rand 6 aufweist.

## Patentansprüche

1. Dichtungsanordnung, umfassend zumindest einen Dichtring (1) zur Abdichtung eines im Wesentlichen U-förmigen Dichtspalts (2) zwischen zwei Maschinenelementen (3,4), wobei der Dichtring (1) kongruent zum Dichtspalt (2) im Wesentlichen U-förmig ausgebildet ist, mit einem Boden (5) und einem axial vom Boden (5) abgewandten offenen Rand (6).

2. Dichtungsanordnung nach Anspruch 1, **dadurch gekennzeichnet, dass** der offene Rand (6) eine umfangsseitig umlaufende wulstförmige erste Verdickung (7) aufweist.

3. Dichtungsanordnung nach Anspruch 2, **dadurch gekennzeichnet, dass** die Verdickung (7) kraft-und/oder formschlüssig in einer ersten Vertiefung (14) von zumindest einem der Maschinenelemente (3,4) festlegbar ist und dass der Dichtring (1) und dieses Maschinenelement (3,4) eine vormontierbare Einheit (15) bilden.

4. Dichtungsanordnung nach einem der Ansprüche 1 bis 3, **dadurch gekennzeichnet, dass** axial zwischen dem Rand (6) und dem Boden (5) eine sich in radialer Richtung erstreckende kreisringförmige Stufe (8) angeordnet ist.

5. Dichtungsanordnung nach Anspruch 4, **dadurch gekennzeichnet, dass** die sich axial beiderseits an die Stufe (8) anschließenden Teilbereiche (9,10) jeweils konisch ausgebildet sind.

6. Dichtungsanordnung nach einem der Ansprüche 1 bis 5, **dadurch gekennzeichnet, dass** der Boden (5) eine im Wesentlichen zentrisch angeordnete Durchbrechung (11) aufweist, zur Abdichtung von Teilleitungen (12,13) der beiden Maschinenelemente (3,4), die konzentrisch zu der Durchbrechung (11) angeordnet sind.

7. Dichtungsanordnung nach Anspruch 6, **dadurch gekennzeichnet, dass** der Boden (5) eine die Durchbrechung (11) begrenzende umfangsseitig umlaufende wulstförmige zweite Verdickung (16) aufweist.

8. Dichtungsanordnung nach Anspruch 7, **dadurch gekennzeichnet, dass** die zweite Verdickung (16) kraft-und/oder formschlüssig in einer zweiten Vertiefung (17) von zumindest einem der Maschinenelemente (3,4) festlegbar ist und dass der Dichtring (1) und dieses Maschinenelement (3,4) eine vormontierbare Einheit (15) bilden.

9. Dichtungsanordnung nach einem der Ansprüche 1 bis 8, **dadurch gekennzeichnet, dass** dem Dichtring (1) innerhalb des Dichtspalt (2) ein weiterer Dichtring (18) in einer funktionstechnischen Reihenschaltung zugeordnet ist.

10. Dichtungsanordnung nach einem der Ansprüche 1 bis 9, **dadurch gekennzeichnet, dass** der Dichtring (1) und/oder der weitere Dichtring (18) aus einem Elastomer, einem Softmetall oder einem mit Elastomer beschichteten Softmetall besteht.

11. Dichtring (1) nach einem der Ansprüche 1 bis 10, zur Abdichtung eines im Wesentlichen U-förmigen Dichtspalts (2) zwischen zwei Maschinenelementen (3,4), wobei der Dichtring (1) kongruent zum Dichtspalt (2) im Wesentlichen U-förmig ausgebildet ist, mit einem Boden (5) und einem axial vom Boden (5) abgewandten offenen Rand (6).

12. Verwendung einer Dichtungsanordnung oder eines Dichtrings (1) nach einem der Ansprüche 1 bis 11 in einer CO₂-Klimaanlage.
